# EUROPEAN PATENT APPLICATION

(11) **EP 4 550 141 A1**
(43) Date of publication of application: **07.05.2025**
(21) Application number: 22948635.2
(22) Date of filing: 30.06.2022
(51) Int. Cl.: G06F 9/50, H04W 72/04

(54) **ARTIFICIAL INTELLIGENCE APPLICATION MANAGEMENT METHOD AND APPARATUS, AND COMMUNICATION DEVICE**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2022/103169
(87) International publication number: WO 2024/000533

(57) **Abstract**

An artificial intelligence (AI) application management method and apparatus, and a communication device, relating to the technical field of mobile communications. A network device can receive an AI processing capability sent by a user equipment, and according to a relationship between the AI processing capability and processing capability requirements of an AI processing task to be configured, determines a configuration rule for configuring an AI processing task to the user equipment. Therefore, scheduling of tasks during communication is optimized, and a scheme of coordinating the AI processing task avoids the problem of low efficiency or even interruption due to the fact that processing tasks exceed the processing capability of a terminal.

## Description

### TECHNICAL FIELD

The present disclosure relates to the field of mobile communication technology, and in particular to a method and apparatus for application management of artificial intelligence and a communication device.

### BACKGROUND

With the continuous evolution of mobile network communication technology, various application scenarios have higher and higher requirements for network communication efficiency. Artificial Intelligence (AI) technology has made continuous breakthroughs in the field of communication, bringing rich application experience to users. However, due to the limited processing capability of a terminal, at present, there is no good solution for coordinating AI processing tasks.

### SUMMARY

The present disclosure proposes a method and apparatus for application management of artificial intelligence and a communication device, provides a solution for coordinating artificial intelligence processing tasks, optimizes scheduling of various tasks during the communication process, and avoids inefficiency or even interruption problems caused by processing tasks exceeding the processing capability of the terminal.

In a first aspect, an embodiment of the present disclosure provides a method for application management of artificial intelligence , which is performed by a network device, and the method includes: receiving artificial intelligence (AI) processing capability sent by a user equipment; and determining a configuration rule for configuring an AI processing task for the user equipment according to a relationship between the AI processing capability and a processing capability requirement of the AI processing task to be configured.

In some embodiments of the present disclosure, determining the configuration rule for configuring the AI processing task for the user equipment includes: in a case where multiple AI processing tasks are to be configured and a sum of processing capability requirements of the multiple AI processing tasks to be configured is less than or equal to the AI processing capability, configuring the multiple AI processing tasks to be configured to the user equipment.

In some embodiments of the present disclosure, determining the configuration rule for configuring the AI processing task to the user equipment includes: in a case where multiple AI processing tasks are to be configured and a sum of processing capability requirements of the multiple AI processing tasks to be configured is greater than the AI processing capability, determining at least one of an occurrence time, a delay interval and a priority of the AI processing task; and determining the configuration rule based on the at least one of the occurrence time, the delay interval and the priority of the AI processing task.

In some embodiments of the present disclosure, determining the configuration rule based on at least one of the occurrence time, delay interval and priority of the AI processing task includes: in a case where the processing capability requirements of two or more AI processing tasks among the multiple AI processing tasks to be configured meet a simultaneous processing condition, determining the configuration rule as: configuring the occurrence times of the two or more AI processing tasks to be the same.

In some embodiments of the present disclosure, determining the configuration rule based on at least one of the occurrence time, the delay interval, and the priority of the AI processing task includes: in a case where the processing capability requirements of two or more AI processing tasks among the multiple AI processing tasks to be configured do not meet a simultaneous processing condition, determining the configuration rule as any one of the following: prohibiting from configuring the two or more AI processing tasks for the user equipment; configuring a delay interval between the occurrence times of the two or more AI processing tasks; or configuring the two or more AI processing tasks with different priorities, where the simultaneous processing condition is that a sum of the processing capability requirements of the two AI processing tasks is less than or equal to the AI processing capability.

In some embodiments of the present disclosure, determining the priority of the AI processing task includes: determining the priority of each AI processing task to be configured according to a network protocol between a network device and the user equipment; or configuring a priority for each AI processing task according to an importance level or an emergency level of each AI processing task to be configured.

In some embodiments of the present disclosure, there is a delay interval between two or more AI processing tasks of different priorities, and in descending order of priority, the delay interval between a previous AI processing task and a subsequent AI processing task is greater than a processing time of the previous AI processing task.

In some embodiments of the present disclosure, the AI processing capability includes a storage capability and/or computing capability of the user equipment.

In a second aspect, an embodiment of the present disclosure provides a method for application management of artificial intelligence, which is performed by a user equipment and includes: sending an artificial intelligence (AI) processing capability to a network device; and receiving and executing an AI processing task configured by the network device.

In some embodiments of the present disclosure, sending the AI processing capability to the network device includes: sending a storage capability and/or computing capability of the user equipment to the network device.

In some embodiments of the present disclosure, receiving and executing the AI processing task configured by the network device includes: receiving at least one of an occurrence time, a delay interval, and a priority of the AI processing task; and executing the AI processing task according to the at least one of the occurrence time, the delay interval, and the priority of the AI processing task.

In some embodiments of the present disclosure, executing the AI processing task according to the at least one of the occurrence time, the delay interval, and the priority of the AI processing task includes: executing a corresponding AI processing task at the occurrence time; and/or executing the AI processing task after the delay interval corresponding to the AI processing task; and/or executing the AI processing task in descending order of priority.

In some embodiments of the present disclosure, executing the AI processing tasks according to the priority includes: executing a preset number of AI processing tasks in descending order of priority, and abandoning execution of the remaining AI processing tasks.

In a third aspect, an embodiment of the present disclosure provides an apparatus for application management of artificial intelligence , which is provided in a network device, and includes: a receiving unit, configured to receive an artificial intelligence AI processing capability sent by a user equipment; and a configuration unit, configured to determine a configuration rule for configuring an AI processing task to the user equipment based on a relationship between the AI processing capability and a processing capability requirement of the AI processing task to be configured.

In a fourth aspect, an embodiment of the present disclosure provides an apparatus for application management of artificial intelligence, which is applied to a user equipment, and includes: a transceiver unit, configured to send an artificial intelligence AI processing capability to a network device, and receive an AI processing task configured by the network device; and an execution unit, configured to execute the AI processing task.

In a fifth aspect, an embodiment of the present disclosure provides a communication device, which includes: a transceiver; a memory; and a processor which is connected to the transceiver and the memory, respectively, and is configured to execute computer-executable instructions on the memory to control wireless signal reception and transmission of the transceiver and enable to implement the methods of the embodiments in the first aspect or the second aspect of the present disclosure.

In a sixth aspect, an embodiment of the present disclosure provides a computer storage medium, where the computer storage medium stores computer executable instructions which, after being executed by a processor, enable to implement the methods of the embodiments in the first aspect or the second aspect of the present disclosure.

According to the methods for application management of artificial intelligence in the present disclosure, the network device is able to receive the AI processing capability sent by the user equipment, and determine the configuration rule for configuring the AI processing tasks for the user equipment based on the relationship between the AI processing capability and the processing capability requirements of the AI processing tasks to be configured, thereby optimizing the scheduling of various tasks during the communication process. The scheme of coordinating the AI processing tasks avoids the inefficiency or even interruption caused by the processing tasks exceeding the processing capability of the terminal.

Additional aspects and advantages of the present disclosure will partly be provided in the following description and partly be obvious from the following description or learned through practice of the present disclosure.

### BRIEF DESCRIPTION OF THE DRAWINGS

The above and/or additional aspects and advantages of the present disclosure will become apparent and easily understood from the following description of the embodiments in conjunction with the accompanying drawings, in which:
FIG. 1 is a flow chart of a method for application management of artificial intelligence according to an embodiment of the present disclosure;
FIG. 2 is a flow chart of a method for application management of artificial intelligence according to an embodiment of the present disclosure;
FIG. 3 is a flow chart of a method for application management of artificial intelligence according to an embodiment of the present disclosure;
FIG. 4 is a flow chart of a method for application management of artificial intelligence according to an embodiment of the present disclosure;
FIG. 5 is a flow chart of a method for application management of artificial intelligence according to an embodiment of the present disclosure;
FIG. 6 is a schematic diagram of signaling interaction of a method for application management of artificial intelligence according to an embodiment of the present disclosure;
FIG. 7 is a schematic block diagram of an apparatus for application management of artificial intelligence according to an embodiment of the present disclosure;
FIG. 8 is a schematic block diagram of an apparatus for application management of artificial intelligence according to an embodiment of the present disclosure;
FIG. 9 is a schematic block diagram of an apparatus for application management of artificial intelligence according to an embodiment of the present disclosure;
FIG. 10 is a schematic block diagram of an apparatus for application management of artificial intelligence according to an embodiment of the present disclosure;
FIG. 11 is a schematic diagram of the structure of a communication device according to an embodiment of the present disclosure; and
FIG. 12 is a schematic diagram of the structure of a chip provided in an embodiment of the present disclosure.

### DETAILED DESCRIPTION

Embodiments of the present disclosure are described in detail below, and examples of the embodiments are shown in the accompanying drawings, where the same or similar reference numerals throughout represent the same or similar elements or elements having the same or similar functions. The embodiments described below with reference to the accompanying drawings are illustrative and are intended to be used to explain the present disclosure, and should not be construed as limiting the present disclosure.

The boundaries of application scenarios of mobile network communication technology in real life are constantly expanding. For example, with the emergence of future-oriented Augmented Reality (AR), Virtual Reality (VR), and more new Internet applications (such as Internet of Vehicles, Internet of Things, etc.), the demands for network communication efficiency, speed, latency, bandwidth and other capabilities in various application scenarios are increasingly higher. On the other hand, Artificial Intelligence (AI) technology has made continuous breakthroughs in the field of communications, bringing rich application experience to users. For example, applications such as intelligent voice and computer vision are involved in education, transportation, home, medical care, retail, security and other fields, which not only bring convenience to people's lives, but also promote industrial upgrading in various industries.

RAN1 in R18 standard protocol of the Third Generation Partnership Project (3GPP) has established a research project on artificial intelligence technology in wireless air interfaces. This project aims to study how to introduce artificial intelligence technology in wireless air interfaces and explore how artificial intelligence technology can assist in improving the transmission technology of the wireless air interfaces.

In the research of wireless AI, the application cases of artificial intelligence in the field of communication include, for example, AI-based CSI enhancement, AI-based beam management, AI-based positioning, etc. There are two important stages involved in AI operations. The first stage is a model training stage, that is, a stage of obtaining the model. The second stage is a model deployment stage, that is, a stage of model reasoning and application. In the current discussion, AI training is basically a pre-trained model, and the terminal side generally participates in the reasoning. For the reasoning on the terminal side, the terminal is required to have certain AI processing capabilities, such as storage capability and/or computing capability.

However, since in the use scenarios of the wireless AI, the AI model can be deployed on the terminal side, these AI tasks will share the AI processing capabilities of the terminal. For the terminal, the AI processing capabilities of the terminal are certain, and when there are multiple AI processing tasks, it is necessary to coordinate task processing. At present, there is no good solution for coordinating AI processing tasks.

To this end, the present disclosure proposes a method and apparatus for application management of artificial intelligence and a communication device, provides a solution for coordinating artificial intelligence processing tasks, optimizes the scheduling of various tasks during the communication process, and avoids inefficiency or even interruption caused by processing tasks exceeding the terminal processing capability.

It can be understood that the solution provided in the present disclosure can be used for the fifth generation mobile communication technology (Fifth Generation, 5G) and its subsequent communication technologies, such as the fifth generation mobile communication technology evolution (5G-advanced), the sixth generation mobile communication technology (Sixth Generation, 6G), etc., which are not limited in the present disclosure.

The artificial intelligence application management method provided in the present disclosure is introduced in detail below with reference to the accompanying drawings.

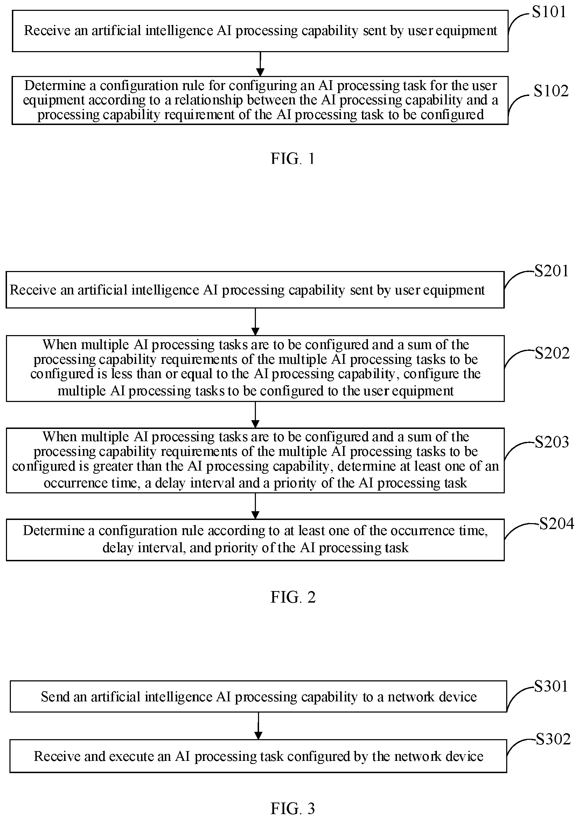

FIG. 1 shows a flow chart of a method for application management of artificial intelligence according to an embodiment of the present disclosure. As shown in FIG. 1, the method is performed by a network device. In an embodiment of the present disclosure, the network device is a base station, for example, a gNB (next Generation Node B) in a 5G communication scenario.

The method may include the following steps.

In S101, an artificial intelligence AI processing capability sent by a user equipment is received.

In an embodiment of the present disclosure, the user equipment (UE) includes but is not limited to an intelligent terminal device, a cellular phone, a wireless device, a handset, a mobile unit, a vehicle, a vehicle-mounted device, etc., which are not limited in the present disclosure.

In the present disclosure, the AI processing capability sent by the UE includes a storage capability and/or a computing capability. The storage capability is used to store the model and intermediate parameters generated in the reasoning, and the computing capability is used to calculate the result of the reasoning. In the present disclosure, the processing capability may also include other parameters for measuring the terminal processing capability, etc., which are not limited here.

In S102, a configuration rule for configuring an AI processing task for the user equipment is determined according to a relationship between the AI processing capability and a processing capability requirement of the AI processing task to be configured.

In an embodiment of the present disclosure, the network device will receive the AI processing capability reported by the terminal and can determine occupancy of the terminal processing capability by each processing task. The network device will determine the configuration rule for configuring the AI processing task to the user equipment based on a relationship between an upper limit of the terminal processing capability and the processing task. In other words, the network device can determine whether to configure a certain AI processing task for the terminal, or determine to configure an occurrence time of the AI processing task, or determine whether there will be a delay in a certain processing task.

In summary, according to the method for application management of artificial intelligence provided by the embodiment of the present disclosure, the network device can receive the AI processing capability sent by the user equipment, and determine the configuration rule for configuring the AI processing task to the user equipment based on the relationship between the AI processing capability and the processing capability requirements of the AI processing tasks to be configured, thereby optimizing the scheduling of various tasks during the communication process. The scheme of coordinating the AI processing tasks avoids the inefficiency or even interruption caused by the processing tasks exceeding the terminal processing capability.

FIG. 2 shows a flow chart of a method for application management of artificial intelligence according to an embodiment of the present disclosure. The method is performed by a network device, and based on the embodiment shown in FIG. 1, as shown in FIG. 2, the method may include the following steps.

In S201, an artificial intelligence AI processing capability sent by user equipment is received.

In an embodiment of the present disclosure, the above step S201 is of the same principle as step S101 in the embodiment shown in FIG. 1, and reference may be made to the relevant description of the above step S101, which will not be repeated here.

In S202, in a case where multiple AI processing tasks are to be configured and a sum of the processing capability requirements of the multiple AI processing tasks to be configured is less than or equal to the AI processing capability, the multiple AI processing tasks to be configured are configured to the user equipment.

In some embodiments of the present disclosure, the network device can determine the configuration rule for configuring the AI processing task to the user equipment according to the relationship between the AI processing capability and the processing capability requirements of the AI processing tasks to be configured. For example, if the network device intends to configure multiple AI processing tasks for the terminal, it needs to determine whether the requirements for the processing capability of the user equipment (e.g., the terminal) by the multiple AI processing tasks meet the processing capability, that is, when the sum of the processing capability requirements of the multiple AI processing tasks to be configured is less than or equal to the AI processing capability reported by the UE, the network device determines that the configuration rule for configuring the AI processing task to the user equipment is to configure the multiple AI processing tasks for the UE.

In this embodiment, since the requirements for UE processing capability by the multiple AI processing tasks do not exceed the processing capability reported by the UE, the network device can directly configure the UE to execute the multiple AI processing tasks without specifying the occurrence time or other parameters of each AI processing task, which is not described in the present disclosure.

In the present disclosure, AI processing task includes but are not limited to AI-based CSI enhancement, AI-based beam management, AI-based positioning, etc., which are not limited in the present disclosure.

For example, in order to avoid a shortage of terminal processing capability, the total processing capability requirements of the AI processing tasks configured by the network for the terminal should not be greater than the AI processing capability reported by the terminal, which includes the storage capability, the computing capability or other parameters used to measure the terminal processing capability. In an example where the storage capability is taken as AI processing capability, a total storage size of the terminal for AI tasks is C0, that is, the AI processing capability reported by the UE is C0. When the network device configures an AI-based CSI compression task to be performed with a storage requirement of C1 and an AI-based beam management task to be performed with a storage requirement of C2, if C1+C2<C0, the AI-based CSI compression task and the AI-based beam management task can be configured for the UE.

In S203, in a case where multiple AI processing tasks are to be configured, and the sum of the processing capability requirements of the multiple AI processing tasks to be configured is greater than the AI processing capability, at least one of an occurrence time, a delay interval and a priority of the AI processing task is determined.

In the present disclosure, as an optional embodiment, when the network device determines whether the requirements for the processing capability of the user equipment by the multiple AI processing tasks meet the processing capability, if the sum of the processing capability requirements of the multiple AI processing tasks to be configured is greater than the AI processing capability reported by the UE, there are multiple configuration schemes for the network device, which will be discussed below in different situations.

In an optional embodiment, if the total processing capability requirements of the multiple AI processing tasks to be configured are greater than the AI processing capability reported by the UE, the network device may directly determine the configuration rule as: prohibiting from configuring the multiple AI processing tasks to the UE.

For example, when the network device configures an AI-based CSI compression task to be performed with a storage requirement of C1, an AI-based beam management task to be performed with a storage requirement of C2, and an AI-based positioning task to be performed with a storage requirement of C3, if C1+C2+C3 >C0, the configuration rule can be determined as: prohibiting from configuring the UE with the AI-based CSI compression task, the AI-based beam management task, and the AI-based positioning task.

In an optional embodiment of the present disclosure, if the sum of the processing capability requirements of the multiple AI processing tasks to be configured is greater than the AI processing capability reported by the UE, the network device can perform a secondary judgment, that is, the network device further determines a relationship between the processing capability requirements of two or more AI processing tasks among the multiple AI processing tasks and the AI processing capability, and determine at least one of an occurrence time, a delay interval and a priority of the AI processing tasks, so as to determine the configuration rule accordingly.

In S204, a configuration rule is determined according to at least one of the occurrence time, delay interval, and priority of the AI processing task.

In the present disclosure, this step specifically includes: when the processing capability requirements of two or more AI processing tasks among the multiple AI processing tasks to be configured meet a simultaneous processing condition, the occurrence time of the two AI processing tasks is configured to be the same.

The simultaneous processing condition is that the sum of the processing capability requirements of two AI processing tasks is less than or equal to the AI processing capability.

In other words, the sum of the processing capability requirements of the AI processing tasks configured by the network for the terminal can be greater than the processing capability reported by the terminal, but the AI tasks to be processed must meet a preset relationship. For example, the AI tasks processed simultaneously cannot be greater than the processing capability reported by the terminal.

For example, as in the above example, when the network device configures an AI-based CSI compression task to be performed with a storage requirement of C1, an AI-based beam management task to be performed with a storage requirement of C2, and an AI-based positioning task to be performed with a storage requirement of C3, if C1+C2+C3 >C0, but C1+C2 < C0, the configuration rule can be determined as: configuring the AI-based CSI compression task and the AI-based beam management task to the UE.

In an optional embodiment, this step may also include: when the processing capability requirements of two or more AI processing tasks among the multiple AI processing tasks to be configured do not meet the simultaneous processing condition, determining the configuration rule to be any one of the following: prohibiting from configuring the two or more AI processing tasks to the user equipment; configuring a delay interval between the occurrence times of the two or more AI processing tasks; or configuring the two or more AI processing tasks with different priorities.

For example, as in the above example, when the network device configures an AI-based CSI compression task to be performed with a storage requirement of C1, an AI-based beam management task to be performed with a storage requirement of C2, and an AI-based positioning task to be performed with a storage requirement of C3, if C1+C2+C3>C0, and C1+C2>C0, the configuration rule can be determined as: prohibiting from configuring the AI-based CSI compression task and the AI-based beam management task to the UE.

As another optional implementation, the network device can also determine the configuration rule as: configuring a delay interval between the occurrence times of the two or more AI processing tasks. In other words, the sum of the processing capability requirements by the AI processing tasks configured by the network for the terminal may be greater than the processing capability reported by the terminal, but the AI tasks to be performed must meet a preset relationship, for example, the AI processing tasks must be separated by X time units.

As in the above example, when the network device configures an AI-based CSI compression task to be performed with a storage requirement of C1, an AI-based beam management task to be performed with a storage requirement of C2, and an AI-based positioning task to be performed with a storage requirement of C3, if C1+C2+ C3>C0, and C1+C2>C0, the configuration rule can be determined as follows: configuring a delay interval between the occurrence time of the AI-based CSI compression task and the occurrence time of the AI-based beam management task to the UE. In other words, the AI-based CSI compression task and the AI-based beam management task cannot be processed at the same time, but need to be separated by X time units. For example, the terminal can be configured to process the CSI compression task in the time period of t0~t1 and the beam management task in the time period of t2~t3.

It should be understood that the delay interval corresponding to a certain AI processing task can be the interval between this AI processing task and the previous AI processing task, or the interval between the AI processing task and the first executed AI processing task, which is not limited in the present disclosure. In addition, the delay interval should be greater than the processing time of processing the AI task. That is, the delay interval between the previously processed AI processing task and the subsequently processed AI processing task should be greater than the processing time for the previously processed AI processing task.

According to the above description, in another optional example, if C1+C2+ C3 >C0, but C1+C2<C0, the configuration rule can be further determined as: configuring the UE with the AI-based CSI compression task and the AI-based beam management task, and configuring the AI-based positioning task with a delay interval to the AI-based CSI compression task and the AI-based beam management task. For example, the terminal can be configured to process the AI-based CSI compression task and the beam management task in the time period of t0~t1, and to process the AI-based positioning task in the interval of t2~t3. In other words, the delay interval corresponding to the AI-based positioning task can be understood as a length of the time period between t0-t2.

For another example, the network device can configure the terminal to process the AI-based CSI compression task in the time period of t0~t1, process the beam management task in the time period of t2~t3, and process the AI-based positioning task in the time period of t4~t5. The delay interval corresponding to the AI-based positioning task can be understood as the length of the time period between t0-t4, or the length of the time period between t2-t4, which is not limited in the present disclosure.

The delay interval in the present disclosure may be a preset value or a value configured by the network, the value of the above time unit or delay interval is not limited in the present disclosure, and depends on the specific situation. It can be understood that the delay interval can be measured in time units. The value of the time unit is not limited in the present disclosure.

In an optional implementation, the delay interval can be determined according to the priority of each AI processing task, where in descending order of priority, the delay interval between a previous AI processing task and a subsequent AI processing task is greater than the processing time of the previous AI processing task.

For example, in the above example, the beam management task is processed in the time period of t2~t3, and the AI-based positioning task is processed in the time period of t4~t5. The delay interval corresponding to the AI-based positioning task is the length of the time period between t2-t4, and then the length of the time period of t2-t4 should be greater than or equal to the processing time required to process the beam management task.

The AI-based CSI compression task and beam management task are processed in the time period of t0~t1, and the AI-based positioning task is processed in the interval of t2~t3. The length of the time period of t0-t2 should be greater than or equal to the maximum of the time for processing the AI-based CSI compression task and the time for processing the AI-based beam management task.

It can be understood that, in this embodiment, the network device may not configure the order of executing the AI processing tasks to the UE, but only configure the time interval between the AI processing tasks to ensure that the multiple AU processing tasks that may exceed the UE processing capability are not executed simultaneously.

As an optional implementation, the network device may also determine the configuration rule as: configuring two or more AI processing tasks to have different priorities.

In other words, the total processing capability requirements of the AI processing tasks configured by the network for the terminal can be greater than the processing capability reported by the terminal, but the processed AI tasks need to meet the preset relationship. For example, the execution priorities of the AI processing tasks are different, and the AI processing tasks can be executed in order of priority.

As in the above example, in a case where the network device configures an AI-based CSI compression task to be performed with a storage requirement of C1, an AI-based beam management task to be performed with a storage requirement of C2, and an AI-based positioning task to be performed with a storage requirement of C3, if C1+C2+ C3>C0, and C1+C2>C0, the configuration rule can be determined as: configuring the UE with the AI-based CSI compression task and the AI-based beam management task having different priorities. In other words, the AI-based CSI compression task and the AI-based beam management task cannot be processed at the same time, but need to be processed in sequence according to a certain priority order. For example, the task priority can be configured as CSI>beam management>positioning, and the terminal can follow the rule of first executing the AI-based CSI compression task and then executing the AI-based beam management task.

According to the above description, in another optional example, if C1+C2+C3 >C0, the priorities of the AI tasks can be configured as CSI>beam management>positioning, and the terminal can follow the rule of first executing the AI-based CSI compression task, then the AI-based beam management task, and then the AI-based positioning task, or only executing the first two tasks and abandoning the third task with a lower priority.

In other words, in this embodiment, in the case where there may be not sufficient processing capability, the network device can preset the priority. The terminal processes the AI tasks according to the processing priority or abandons the processing of low-priority tasks.

Specifically, the approach for configuring the priority by the network device may include: determining the priorities of the AI processing tasks to be configured according to a network protocol between the network device and the user equipment; or configuring the priorities of the AI processing tasks according to importance levels or emergency levels of the multiple AI processing tasks to be configured. The priority can also be determined in other ways, which are not limited in the present disclosure.

In the present disclosure, there is a delay interval between two or more AI processing tasks of different priorities, and for the delay interval, reference can be made to the explanation in the above embodiments.

It can be understood that, compared to the above example, in this embodiment, in addition to configuring the time interval between the AI processing tasks, the network device can also configure the order of executing the AI processing tasks to the UE to ensure that multiple AU processing tasks that may exceed the UE processing capability are not executed at the same time and are executed in a certain priority order. Similar to the above example, there is a delay interval between the previously executed processing task and the subsequently executed processing task, so as to ensure that it does not exceed the UE processing capability during execution of the AI processing tasks.

It should be understood that when configuring multiple AI processing tasks, the configuration rules can be different, that is, a plurality of configuration rules can be applied at the same time. For example, the first and second tasks can be executed at the same time, and have a delay interval with respect to the third task. Then, the third task is executed after a certain time interval after the first and second tasks are executed. The priority of the third task is higher than that of the fourth task, so the third task is executed first and then the fourth task is executed.

In summary, according to the method for application management of artificial intelligence in the present disclosure, the network device can determine different configuration rules for configuring AI processing tasks to the user equipment based on the relationship between the AI processing capability and the processing capability requirements of the AI processing tasks to be configured, such as allowing or disabling the execution, or executing at a certain delay interval or at a certain priority, etc., which fully considers the scheduling and configuration of AI applications in various situations, optimizes the scheduling of various tasks during the communication process, and avoids inefficiency or even interruption caused by processing tasks exceeding the terminal processing capability.

FIG. 3 shows a flow chart of a method for application management of artificial intelligence according to an embodiment of the present disclosure. The method is executed by a user equipment. In an embodiment of the present disclosure, the user equipment (UE) includes but is not limited to an intelligent terminal device, a cellular phone, a wireless device, a handset, a mobile unit, a vehicle, a vehicle-mounted device, etc., which are not limited in the present disclosure.

As shown in FIG. 3, the method may include the following steps.

In S301, an artificial intelligence (AI) processing capability is sent to a network device.

In the present disclosure, the AI processing capability sent by the UE to the network device includes a storage capability and/or a computing capability. The storage capability is used to store the model and intermediate parameters generated in the reasoning, and the computing capability is used to calculate the result of the reasoning. In the present disclosure, the processing capability may also include other parameters for measuring the terminal processing capability, etc., which are not limited here.

In S302, an AI processing task configured by the network device is received and executed.

In an embodiment of the present disclosure, the UE can receive from the network device a configuration rule for configuring the AI processing tasks to the user equipment, which is determined by the network device based on a relationship between an upper limit of the terminal processing capability and the processing tasks. In other words, the network device can determine whether to configure a certain AI processing task for the terminal, or determine to configure an occurrence time of the AI processing task, or determine whether a certain processing task will be delayed, etc., and the UE can execute the tasks according to the configuration by the network device.

In summary, according to the method for application management of artificial intelligence in the present disclosure, the UE can send the artificial intelligence AI processing capability to the network device, receive and execute the AI processing tasks configured by the network device, and thus perform various AI processing tasks according to the configuration of the network device, thereby optimizing the scheduling of various tasks during the communication process. The scheme of coordinating the AI processing tasks avoids the inefficiency or even interruption caused by the processing tasks exceeding the terminal processing capability.

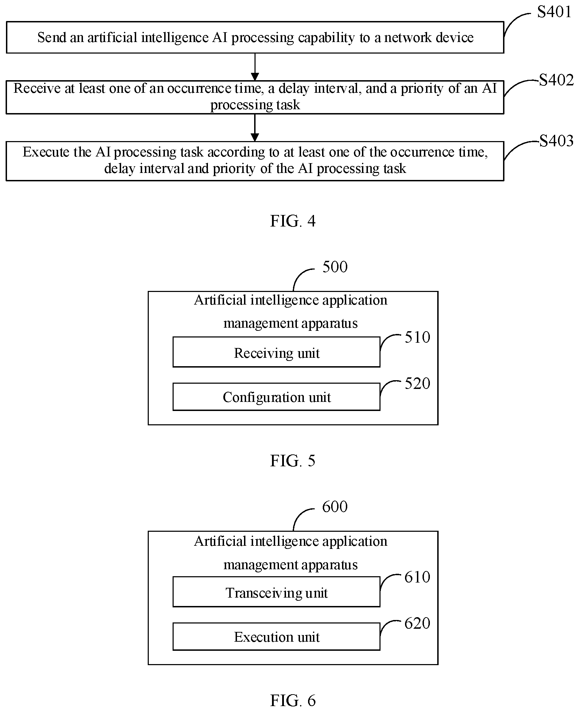

FIG. 4 is a flow chart of a method for application management of artificial intelligence according to an embodiment of the present disclosure. The method is applied to a UE, and based on the embodiment shown in FIG. 3, as shown in FIG. 4, the method may include the following steps.

In S401, an artificial intelligence (AI) processing capability is sent to a network device.

Specifically, in an embodiment of the present disclosure, this step includes: sending a storage capability and/or a computing capability of the user equipment to the network device.

The step S401 is of the same principle as the step S301 in the embodiment shown in FIG. 3, and reference may be made to the relevant description of S403, which will not be repeated here.

In S402, at least one of an occurrence time, a delay interval, and a priority of an AI processing task is received.

In an embodiment of the present disclosure, according to the embodiments shown in FIGS. 1 and 2, if the network device determines that the configuration rule is to prohibit configuring AI processing tasks to the UE, the UE will not receive the relevant AI tasks. Therefore, for the UE side, this situation is not in discussion.

Further, according to the embodiments shown in FIG. 1 and FIG. 2, if the network device determines to configure an AI processing task to the UE, the configured AI processing task must satisfy a judgment condition of the network side, and the UE can receive the specific configuration rule and the AI processing tasks to be executed according to the configuration by the network side to execute one or more AI processing tasks. The UE can receive the configuration rule determined by the network device, such as the occurrence time, the delay interval or the priority of executing the AI processing task.

In S403, the AI processing task is executed according to at least one of the occurrence time, delay interval and priority of the AI processing task.

In an embodiment of the present disclosure, the step specifically includes: executing the corresponding AI processing task at the occurrence time; and/or executing the AI processing task after a delay interval corresponding to the AI processing task; and/or executing the AI processing task in descending order of priority.

It should be understood that the delay interval corresponding to a certain AI processing task can be the interval between this AI processing task and the previous AI processing task, or the interval between this AI processing task and the first executed AI processing task, which is not limited in the present disclosure. In addition, the delay interval should be greater than the processing time for processing the AI task. That is, the delay interval between the previously processed AI processing task and the subsequently processed AI processing task should be greater than the processing time for the previously processed AI processing task.

This embodiment is described below in comparison with the embodiment shown in FIG. 2.

In some embodiments of the present disclosure, the AI processing capability reported by the UE is used to assist the network device in determining the rule for configuring the AI processing task for the UE. In other words, the network device can determine the configuration rule for configuring the AI processing task for the user equipment based on the relationship between the AI processing capability and the requirements for the processing capability by the AI processing tasks to be configured.

For example, when the sum of the processing capability requirements of multiple AI processing tasks to be configured is less than or equal to the AI processing capability reported by the UE, the network device determines that the configuration rule for configuring the AI processing task for the user equipment is: configuring the multiple AI processing tasks for the UE.

In this case, since the processing capability of the UE is greater than the requirements of the AI processing tasks to be configured, the UE can receive and execute these AI processing tasks configured by the network device for it. In this case, the network device does not need to configure other scheduling rules for the terminal.

For example, taking the storage capability as the AI processing capability, the total storage size of the terminal for AI tasks is C0, that is, the AI processing capability reported by the UE is C0. When the network device configures an AI-based CSI compression task to be performed with a storage requirement of C1, an AI-based beam management task to be performed with a storage requirement of C2, and an AI-based positioning task to be performed with a storage requirement of C3, if C1+C2+C3<C0, these three tasks can be configured to the UE.

In other words, in this embodiment, since the requirements for UE processing capabilities by the multiple AI processing tasks do not exceed the processing capability reported by the UE, the network device can directly configure the UE to execute the multiple AI processing tasks without specifying the occurrence time or other parameters of the AI processing tasks, so the UE can directly execute the multiple AI processing tasks.

When the sum of the processing capability requirements of the multiple AI processing tasks to be configured is greater than the AI processing capability reported by the UE, the network device determines that the configuration rule for configuring the AI processing tasks for the user equipment needs to be discussed in different situations.

In the above example, if C1+C2+C3 >C0, but C1+C2<C0, the AI-based CSI compression task and the AI-based beam management task may be configured for the UE.

In this case, the UE can receive the AI-based CSI compression task and the AI-based beam management task as the AI processing tasks configured by the network device, and can perform these two tasks at the same time. This situation is similar to the previous example.

In this case, for the AI-based positioning task, there are two situations: 1) the network device prohibits configuring this task to the UE; and 2) the network device configures a delay interval or priority for execution of this task.

In the above situation 1), the UE will not receive information related to the execution of the AI-based positioning task. In the above situation 2), the UE may receive a delay interval or priority for executing the task sent by the network device. For example, the network device configures to first execute the AI-based CSI compression task and the AI-based beam management task, and then execute the AI-based positioning task after an interval of X time units, or configures the priority of the AI-based positioning task to be lower than that of the AI-based CSI compression task and the AI-based beam management task, and the UE performs execution according to the priority.

For example, according to the configuration by the network device, the UE can process the AI-based CSI compression task in the time period of t0~t1, and process the AI-based positioning task in the interval of t2~t3.

For the UE, it only needs perform execution according to the configuration by the network device. In an embodiment of the present disclosure, the network device can also inform the UE which AI processing task the time interval is relative to, and the UE can execute accordingly. For another example, according to the configuration of the network device, the UE can first perform the AI-based CSI compression task, then perform the AI-based beam management task, and then perform the AI-based positioning task in the priority order of CSI>beam management>positioning. This example has been described in detail in the embodiment as shown in FIG. 2 and will not be repeated here.

In an optional embodiment, the UE may execute a preset number of AI processing tasks in descending order of priority and abandon execution of the remaining AI processing tasks. For example, in the order of priority of CSI>beam management>positioning, only the first two tasks are executed and the third task with a lower priority is abandoned.

In other words, the network device can inform the UE of only the delay interval required for the execution of the AI processing tasks without informing the specific execution order, or the network device can also inform the UE to execute the AI processing tasks in a certain priority order, and the UE can execute according to the configuration by the network device.

The delay interval or time unit may be a preset value or a network configured value, and the numerical value of the time unit or delay interval is not limited in the present disclosure, and depends on the specific situation.

In addition, the priority in the present disclosure may be determined based on a network protocol between the network device and the user equipment, or may be configured by the network device based on the importance levels or urgency levels of multiple AI processing tasks to be configured, which is not limited in the present disclosure.

In summary, according to the method for application management of artificial intelligence in the present disclosure, the UE can report the AI processing capability to the network device to assist the network device to determine different configuration rules for configuring the AI processing tasks to the user equipment based on the relationship between the AI processing capability and the processing capability requirements of the AI processing tasks to be configured, and the UE can receive and execute the AI processing tasks according to the configuration of the network device, fully considering the scheduling and configuration of AI applications in various situations, optimizing the scheduling of various tasks during the communication process, and avoiding the inefficiency or even interruption caused by the processing tasks exceeding the terminal processing capability.

In the embodiments provided by the present disclosure, the methods provided in the embodiments of the present disclosure are introduced from the perspectives of the network device and the user equipment, respectively. In order to implement the functions in the methods provided in the embodiments of the present disclosure, the network device and the user equipment may include hardware structures and software modules, and the functions are implemented in the form of hardware structures, software modules, or hardware structures plus software modules. A certain function in the above functions may be executed in the form of hardware structures, software modules, or hardware structures plus software modules.

The present disclosure also provides an apparatus for application management of artificial intelligence corresponding to the artificial intelligence application management methods provided in the above embodiments. Since the apparatus for application management of artificial intelligence provided in the embodiment of the present disclosure corresponds to the methods for application management of artificial intelligence provided in the above embodiments, the implementations of the methods for application management of artificial intelligence are also applicable to the apparatus for application management of artificial intelligence provided in this embodiment and will not be described in detail in this embodiment.

FIG. 5 is a structural schematic diagram of an apparatus for application management of artificial intelligence 500 provided in an embodiment of the present disclosure. The apparatus for application management of artificial intelligence 500 can be applied to a network device.

As shown in FIG. 5, the apparatus 500 may include: a receiving unit 510 configured to receive an artificial intelligence (AI) processing capability sent by a user equipment; and a configuration unit 520 configured to determine a configuration rule for configuring an AI processing task to the user equipment according to a relationship between the AI processing capability and a processing capability requirement of the AI processing task to be configured.

According to the apparatus for application management of artificial intelligence provided in the embodiment of the present disclosure, the network device is able to receive the AI processing capability sent by the user equipment, and determine the configuration rule for configuring the AI processing tasks to the user equipment based on the relationship between the AI processing capability and the demand for processing capability by the AI processing tasks to be configured, thereby optimizing the scheduling of various tasks in the communication process. The scheme of coordinating the AI processing task avoids the inefficiency or even interruption caused by the processing tasks exceeding the terminal processing capability.

In some embodiments, the configuration unit 520 is configured to: in a case where multiple AI processing tasks are to be configured and a sum of the processing capability requirements of the multiple AI processing tasks to be configured is less than or equal to the AI processing capability, configure the multiple AI processing tasks to be configured to the user equipment.

In some embodiments, the configuration unit 520 is configured to: in a case where multiple AI processing tasks are to be configured and a sum of the processing capability requirements of the multiple AI processing tasks to be configured is greater than the AI processing capability, determine at least one of an occurrence time, a delay interval and a priority of the AI processing task; and determine the configuration rule based on at least one of the occurrence time, delay interval and priority of the AI processing task.

In some embodiments, the configuration unit 520 is configured to: in a case where the processing capability requirements of two or more AI processing tasks among the multiple AI processing tasks to be configured meet a simultaneous processing condition, determine the configuration rule as: configuring the occurrence time of the two or more AI processing tasks to be configured to be the same.

In some embodiments, the configuration unit 520 is further configured to: in a case where the processing capability requirements of two or more AI processing tasks among the multiple AI processing tasks to be configured do not meet the simultaneous processing condition, determine the configuration rule as any one of the following: prohibiting configuring the two or more AI processing tasks to the user equipment; configuring a delay interval between the occurrence times of the two or more AI processing tasks; configuring the two or more AI processing tasks to have different priorities, where the simultaneous processing condition is that a sum of the processing capability requirements of the two AI or more processing tasks is less than or equal to the AI processing capability.

In some embodiments, the configuration unit 520 is configured to determine the priority of each AI processing task to be configured according to a network protocol between the network device and the user equipment; or configure the priority of each AI processing task according to importance levels or urgency levels of the multiple AI processing tasks to be configured.

In some embodiments, there is a delay interval between two or more AI processing tasks of different priorities, and in descending order of priority, the delay interval between a previous AI processing task and a subsequent AI processing task is greater than the processing time of the previous AI processing task.

In some embodiments, the AI processing capability include a storage capability and/or a computing capability of the user equipment.

In summary, according to the apparatus for application management of artificial intelligence in the present disclosure, the network device can determine different configuration rules for configuring AI processing tasks to the user equipment based on the relationship between the AI processing capability and the processing capability requirements of the AI processing tasks to be configured, such as allowing or disabling execution, or executing with a certain delay interval or in a certain priority, etc., which fully considers the scheduling and configuration of AI applications in various situations, optimizes the scheduling of various tasks during the communication process, and avoids inefficiency or even interruption caused by the processing tasks exceeding the terminal processing capability.

FIG. 6 is a structural schematic diagram of an apparatus for application management of artificial intelligence 600 provided in an embodiment of the present disclosure. The apparatus for application management of artificial intelligence 600 can be applied to a user equipment.

As shown in FIG. 6, the apparatus 600 may include: a transceiving unit 610 configured to send an artificial intelligence AI processing capability to a network device and receive an AI processing task configured by the network device; and an execution unit 620 configured to execute the AI processing task.

According to the apparatus for application management of artificial intelligence in the present disclosure, the UE can send the artificial intelligence AI processing capability to the network device, receive and execute the AI processing task configured by the network device, thereby executing various AI processing tasks according to the configuration by the network device, and optimizing the scheduling of various tasks during the communication process, and the scheme of coordinating the AI processing tasks avoids the inefficiency or even interruption caused by the processing tasks exceeding the terminal processing capability.

In some embodiments, the transceiver unit 610 is configured to send a storage capability and/or a computing capability of the user equipment to the network device.

In some embodiments, the transceiver unit 610 is configured to receive at least one of an occurrence time, delay interval and priority of the AI processing task.

In some embodiments, the execution unit 620 is configured to execute the AI processing task according to at least one of the occurrence time, delay interval and priority of the AI processing task.

In some embodiments, the execution unit 620 is configured to: execute the corresponding AI processing task at the occurrence time; and/or execute the AI processing task after a delay interval since a previous AI processing task is executed; and/or execute the AI processing tasks in descending order of priority.

In some embodiments, the execution unit 620 is configured to execute a preset number of AI processing tasks in descending order of priority, and abandon execution of remaining AI processing tasks.

According to the apparatus for application management of artificial intelligence in the present disclosure, the UE can report the AI processing capability to the network device, thereby assisting the network device in determining different configuration rules for configuring the AI processing tasks to the user equipment according to the relationship between the AI processing capability and the demand for processing capability of the AI processing tasks to be configured, and the UE can receive and execute the AI processing task according to the configuration of the network device, fully considering the scheduling and configuration of AI applications in various situations, optimizing the scheduling of various tasks in the communication process, and avoiding the inefficiency or even interruption caused by the processing tasks exceeding the terminal processing capability.

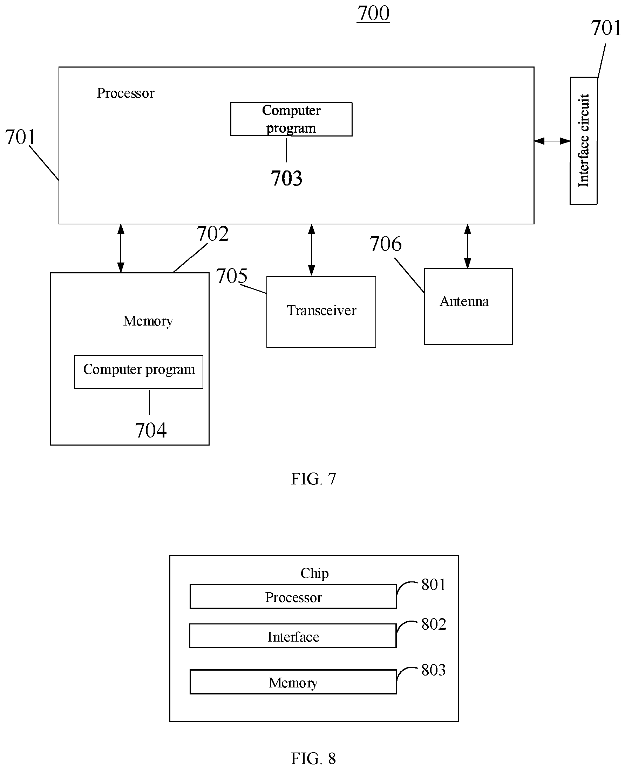

Referring to FIG. 7, FIG. 11 is a structural schematic diagram of a communication device 700 provided in an embodiment of the present disclosure. The communication device 700 can be a network device, a user equipment, or a chip, a chip system or a processor that supports the network device to implement the above methods, or can be a chip, a chip system, or a processor that supports the user equipment to implement the above methods. The device can be configured to implement the methods described in the above method embodiments, and for details, reference can be made to the description in the above method embodiments.

The communication device 700 may include one or more processors 701. The processor 701 may be a general-purpose processor, a dedicated processor, or the like. For example, it may be a baseband processor or a central processing unit. The baseband processor may be configured to process the communication protocol and communication data, and the central processing unit may be configured to control the communication device (such as a base station, a baseband chip, a terminal device, a terminal device chip, a DU or a CU, etc.), execute a computer program, and process the data of the computer program.

Optionally, the communication device 700 may further include one or more memories 702, on which a computer program 704 may be stored, and the processor 701 executes the computer program 704 to cause the communication device 700 to perform the method described in the above method embodiments. Optionally, data may also be stored in the memory 702. The communication device 700 and the memory 702 may be provided separately or integrated together.

Optionally, the communication device 700 may further include a transceiver 705 and an antenna 706. The transceiver 705 may be referred to as a transceiving unit, a transceiver, or a transceiver circuit, or the like, and is configured to implement the transceiving function. The transceiver 705 may include a receiver and a transmitter, the receiver may be referred to as a receiving machine, a receiving circuit, or the like, and is configured to implement the receiving function; the transmitter may be referred to as a transmitting machine, a transmitting circuit, or the like, and is configured to implement the transmitting function.

Optionally, the communication device 700 may further include one or more interface circuits 707. The interface circuit 707 is configured to receive code instructions and transmit them to the processor 701. The processor 701 runs the code instructions to cause the communication device 700 to perform the methods described in the above method embodiments.

In an implementation, the processor 701 may include a transceiver for implementing the receiving and transmitting functions. For example, the transceiver may be a transceiver circuit, an interface, or an interface circuit. The transceiver circuit, interface, or interface circuit for implementing the receiving and transmitting functions may be separate or integrated. The above transceiver circuit, interface, or interface circuit may be configured to read and write code/data, or the above transceiver circuit, interface, or interface circuit may be configured to transmit or deliver signals.

In an implementation, the processor 701 may store a computer program 703, and the computer program 703, when runs on the processor 701, enables the communication device 700 to perform the methods described in the above method embodiments. The computer program 703 may be fixed in the processor 701, in which case the processor 701 may be implemented by hardware.

In an implementation, the communication device 700 may include a circuit that can implement the functions of sending, receiving or communicating in the aforementioned method embodiments. The processor and transceiver described in the present disclosure can be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and transceiver can also be manufactured using various IC process technologies, such as complementary metal oxide semiconductor (CMOS), nMetal-oxide-semiconducto (MOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a user equipment, but the scope of the communication device described in the present disclosure is not limited thereto, and the structure of the communication device may not be limited by FIG. 10. The communication device may be an independent device or may be part of a larger device. For example, the communication device may be:
(1) an independent integrated circuit IC, or chip, or chip system or subsystem;
(2) a collection of one or more ICs, optionally the IC collection may also include a storage component for storing data and computer programs;
(3) an ASIC, such as a modem;
(4) a module that can be embedded in other devices;
(5) a receiver, a terminal device, an intelligent terminal device, a cellular phone, a wireless device, a handset, a mobile unit, a vehicle-mounted device, a network device, a cloud device, an artificial intelligence device, etc.; or
(6) Others.

In the case where the communication device can be a chip or a chip system, reference can be made to the structural schematic diagram of the chip shown in FIG. 8. The chip shown in FIG. 8 includes a processor 801 and an interface 802. The number of processors 801 can be one or more, and the number of interfaces 802 can be multiple.

Optionally, the chip further includes a memory 803, and the memory 803 is configured to store necessary computer programs and data.

Those skilled in the art can also understand that the various illustrative logical blocks and steps listed in the embodiments of the present disclosure may be implemented by electronic hardware, computer software, or a combination of the two. Whether such functions are implemented by hardware or software depends on the specific application and the design requirements of the entire system. Those skilled in the art may use various methods to implement the functions for each specific application, but such implementation should not be understood as going beyond the protection scope of the embodiments of the present disclosure.

The present disclosure also provides a readable storage medium having stored thereon instructions which, when being executed by a computer, implement the functions of any of the above method embodiments.

The present disclosure also provides a computer program product which, when being executed by a computer, implement the functions of any of the above method embodiments.

In the above embodiments, it can be implemented in whole or in part by software, hardware, firmware or any combination thereof. When implemented using software, it can be implemented in whole or in part in the form of a computer program product. The computer program product includes one or more computer programs. When the computer program is loaded and executed on a computer, the process or functions according to the embodiments of the present disclosure is generated in whole or in part. The computer can be a general-purpose computer, a special-purpose computer, a computer network, or other programmable device. The computer program can be stored in a computer-readable storage medium, or transmitted from one computer-readable storage medium to another computer-readable storage medium. For example, the computer program can be transmitted from a website site, computer, server or data center to another website site, computer, server or data center by wired (e.g., a coaxial cable, an optical fiber, or a digital subscriber line (DSL)) or wireless (e.g., infrared, wireless, microwave, etc.) mode. The computer-readable storage medium may be any available medium that a computer can access or a data storage device such as a server or data center that includes one or more available media integrated. The available medium may be a magnetic medium (e.g., a floppy disk, a hard disk, a magnetic tape), an optical medium (e.g., a compact digital video disc (DVD)), a semiconductor medium (e.g., a solid state disk (SSD)), or the like.

Those of ordinary skill in the art may understand that the various numerical numbers such as first and second involved in the present disclosure are only used for the convenience of description and are not used to limit the scope of the embodiments of the present disclosure or indicate the order.

The "at least one" in the present disclosure can also be described as one or multiple, and multiple can be two, three, four or more, which is not limited in the present disclosure. In the embodiments of the present disclosure, for a certain kind of technical feature, technical features in this kind of technical features are distinguished by "first", "second", "third", "A", "B", "C" and "D", etc., and there is no order of precedence or size between the technical features described by the "first", "second", "third", "A", "B", "C" and "D".

As used herein, the terms "machine-readable medium" and "computer-readable medium" refer to any computer program product, apparatus, and/or device (e.g., disk, optical disk, memory, programmable logic device (PLD)) for providing machine instructions and/or data to a programmable processor, including a machine-readable medium that receives machine instructions as a machine-readable signal. The term "machine-readable signal" refers to any signal that is used for providing machine instructions and/or data to a programmable processor.

The systems and techniques described herein may be implemented in a computing system that includes back-end components (e.g., as a data server), or a computing system that includes middleware components (e.g., an application server), or a computing system that includes front-end components (e.g., a user computer with a graphical user interface or a web browser through which a user can interact with implementations of the systems and techniques described herein), or a computing system that includes any combination of such back-end components, middleware components, or front-end components. The components of the system may be interconnected by any form or medium of digital data communication (e.g., a communication network). Examples of communication networks include: a local area network (LAN), a wide area network (WAN), and the Internet.

The computer system may include a client and a server. The client and server are generally remote from each other and usually interact through a communication network. The relationship of the client and server is generated by computer programs running on respective computers and having a client-server relationship with respect to each other.

It should be understood that the various forms of processes shown above can be used to reorder, add or delete steps. For example, the steps recorded in the present disclosure can be executed in parallel, sequentially or in different orders, as long as the desired results of the technical solutions disclosed in the present disclosure can be achieved, which is not limited here

In addition, it should be understood that the various embodiments of the present disclosure may be implemented individually or in combination with other embodiments when the solution permits.

Those of ordinary skill in the art will appreciate that the units and algorithm steps of the examples described in conjunction with the embodiments disclosed herein can be implemented in electronic hardware, or a combination of computer software and electronic hardware. Whether these functions are performed in hardware or software depends on the specific application and design constraints of the technical solution. Professional and technical personnel can use different methods to implement the described functions for each specific application, but such implementation should not be considered as going beyond the scope of the present disclosure.

Those skilled in the art can clearly understand that, for the convenience and brevity of description, for the specific operation processes of the systems, apparatuses and units described above, reference can be made to the corresponding processes in the aforementioned method embodiments, which will not be repeated here.

The above are only specific implementations of the present disclosure, but the protection scope of the present disclosure is not limited thereto. Any person skilled in the art who is familiar with the present technical field can easily think of changes or substitutions within the technical scope disclosed in the present disclosure, which should be covered by the protection scope of the present disclosure. Therefore, the protection scope of the present disclosure should subject to the protection scope of the claims.

## Claims

1. A method for application management of artificial intelligence, performed by a network device, the method comprising:
receiving an artificial intelligence, AI, processing capability sent by a user equipment; and
determining a configuration rule for configuring an AI processing task for the user equipment according to a relationship between the AI processing capability and a processing capability requirement of the AI processing task to be configured.

2. The method according to claim 1, wherein determining the configuration rule for configuring the AI processing task for the user equipment comprises:
in a case where the AI processing task to be configured is multiple and a sum of processing capability requirements of the multiple AI processing tasks to be configured is less than or equal to the AI processing capability, configuring the multiple AI processing tasks to be configured for the user equipment.

3. The method according to claim 1 or 2, wherein determining the configuration rule for configuring the AI processing task for the user equipment comprises:
in a case where multiple AI processing tasks are to be configured and a sum of processing capability requirements of the multiple AI processing tasks to be configured is greater than the AI processing capability, determining at least one of an occurrence time, a delay interval, and a priority of the AI processing task; and
determining the configuration rule according to at least one of the occurrence time, the delay interval, and the priority of the AI processing task.

4. The method according to claim 3, wherein determining the configuration rule according to at least one of the occurrence time, the delay interval, and the priority of the AI processing task comprises:
in a case where the processing capability requirements of two or more AI processing tasks among the multiple AI processing tasks to be configured meet a simultaneous processing condition, determining the configuration rule as configuring the two or more AI processing tasks to have the same occurrence time.

5. The method according to claim 3 or 4, wherein determining the configuration rule according to at least one of the occurrence time, the delay interval, and the priority of the AI processing task comprises:
in a case where the processing capability requirements of two or more AI processing tasks among the multiple AI processing tasks to be configured do not meet the simultaneous processing condition, determining the configuration rule as any of the following:
prohibiting from configuring the two or more AI processing tasks for the user equipment;
configuring the delay interval between the occurrence times of the two or more AI processing tasks; or
configuring the two or more AI processing tasks to have different priorities,
wherein the simultaneous processing condition is that the sum of the processing capability requirements of the two or more AI processing tasks is less than or equal to the AI processing capability.

6. The method according to claim 3, wherein determining the priority of the AI processing task comprises:
determining the priority of each AI processing task to be configured according to a network protocol between the network device and the user equipment; or
configuring the priority of each AI processing task to be configured according to importance levels or urgency levels of the multiple AI processing tasks to be configured.

7. The method according to any one of claims 3 to 6, wherein,
there is a delay interval between two or more AI processing tasks of different priorities, and
in descending order of priority, the delay interval between a previous AI processing task and a subsequent AI processing task is greater than processing time for the previous AI processing task.

8. The method according to any one of claims 1 to 7, wherein the AI processing capability comprises a storage capability and/or a computing capability of the user equipment.

9. A method for application management of artificial intelligence, performed by a user equipment, the method comprising:
sending an artificial intelligence, AI, processing capability to a network device; and
receiving and executing an AI processing task configured by the network device.

10. The method according to claim 9, wherein sending the AI processing capability to the network device comprises:
sending a storage capability and/or a computing capability of the user equipment to the network device.

11. The method according to claim 9 or 10, wherein receiving and executing the AI processing task configured by the network device comprises:
receiving at least one of an occurrence time, a delay interval, and a priority of the AI processing task; and
executing the AI processing task according to at least one of the occurrence time, the delay interval, and the priority of the AI processing task.

12. The method according to claim 11, wherein executing the AI processing task according to at least one of the occurrence time, the delay interval, and the priority of the AI processing task comprises:
executing a corresponding AI processing task at the occurrence time; and/or
executing the AI processing task after the delay interval corresponding to the AI processing task; and/or
executing the AI processing task in descending order of priority.

13. The method according to claim 11, wherein executing the AI processing task according to the priority comprises:
executing a preset number of AI processing tasks in descending order of priority, and abandoning execution of remaining AI processing tasks.

14. An apparatus for application management of artificial intelligence, arranged in a network device, the apparatus comprising:
a receiving unit, configured to receive an artificial intelligence, AI, processing capability sent by a user equipment; and
a configuration unit, configured to determine a configuration rule for configuring an AI processing task for the user equipment according to a relationship between the AI processing capability and a processing capability requirement of the AI processing task to be configured.

15. An apparatus for application management of artificial intelligence, applied to a user equipment, the apparatus comprising:
a transceiving unit, configured to send an artificial intelligence, AI, processing capability to a network device and receive an AI processing task configured by the network device; and
an execution unit, configured to execute the AI processing task.

16. A communication device, comprising: a transceiver; a memory; and a processor that is connected to the transceiver and the memory, respectively, and is configured to execute computer-executable instructions on the memory to control wireless signal reception and transmission of the transceiver and enable to implement the method according to any one of claims 1 to 12.

17. A computer storage medium having stored thereon computer executable instructions which, after being executed by a processor, enable to implement the method according to any one of claims 1 to 12.
